# EUROPÄISCHE PATENTSCHRIFT

(11) **EP 3 793 808 B1**
(45) Veröffentlichungstag und Bekanntmachung des Hinweises auf die Patenterteilung: **27.12.2023**
(21) Anmeldenummer: 19727824.5
(22) Anmeldetag: 15.05.2019
(51) Int. Cl.: B29C 65/02, B29C 65/14, B29C 65/16, B65D 75/58

(54) **EINSCHWEISSEN EINES ENTNAHMESTUTZENS**
WELDING IN A SPOUT
SOUDAGE D'UN BEC VERSEUR

(30) Priorität: 18.05.2018 ES 201830478
(43) Veröffentlichungstag der Anmeldung: 24.03.2021
(73) Patentinhaber: Georg Menshen GmbH & Co. KG, 57413 Finnentrop (DE)
(72) Erfinder: PRADAS CORTINA, Ramón, 08757 Corbera de Llobregat (ES); NOGUÉ I ARBUSÀ, Marti, 08028 Barcelona (ES); ALMOR MORUJO, Carlos, 08030 Barcelona (ES); SANTINI TORRES, Luis Alberto, 08252 Barbera Del Valles Barcelona (ES)
(74) Vertreter: Cohausz Hannig Borkowski Wißgott
(86) Internationale Anmeldenummer: PCT/EP2019/000143
(87) Internationale Veröffentlichungsnummer: WO 2019/219235

(56) Entgegenhaltungen:
- EP-A1- 1 182 144
- WO-A1-2013/074953
- WO-A2-2009/094215
- DE-U1-202011 001 356
- JP-A- 2005 014 467

## Beschreibung

Die Erfindung betrifft ein Verfahren zum Einschweißen eines Entnahmestutzens mit seinem Rippen aufweisenden Einschweißbereich zwischen die flexiblen Kunststofffolien einer Beutelverpackung, wobei die äußeren Ränder der Rippen des Einschweißbereichs auf die Schweißtemperatur erwärmt und im aufgeschmolzenem Zustand zwischen die Randbereiche der Beutelkunststofffolien gebracht und die Folien an die äußeren Ränder der Rippen angedrückt werden.

Es ist aus der DE 10 2006 030 234 A1 bekannt, einen Entnahmestutzen (Spout) zu erwärmen und im erwärmten Zustand in eine Öffnung eines Kunststoffbeutels einzuführen. Danach wird der Entnahmestutzen im eingeführten Zustand durch eine weitere Wärmezufuhr innerhalb der Öffnung mit dem Beutel verschweißt.

Ein solches Verfahren ist zeit- und arbeitsaufwändig.

Ein ähnliches Verfahren ist auch aus der WO 2009/094215 A2 bekannt. Hier weisen die glatten Schweißnahtoberflächen Vertiefungen oder Löcher auf, um hierdurch die Auswirkungen von Gasen zwischen den zu verbindenden Flächen abzuschwächen.

Ein Verfahren zum Einschweißen eines Entnahmestutzens mit seinem Rippen aufweisenden Einschweißbereich zwischen die flexiblen Kunststofffolien einer Beutelverpackung ist aus der DE 20 2011 001356 U1 bekannt, wobei die äußeren Ränder der Rippen des Einschweißbereichs auf die Schweißtemperatur erwärmt und die Folien an die äußeren Ränder der Rippen angedrückt werden.

Aufgabe der Erfindung ist es, ein Verfahren zum Einschweißen eines Entnahmestutzens in einen Beutel so zu verbessern, dass bei geringem Herstellungs-, Zeit- und Energieaufwand eine sehr dichte Verbindung zwischen der Beutelverpackung und dem Entnahmestutzen erreicht wird.

Diese Aufgabe wird erfindungsgemäß durch die Merkmale des Anspruchs 1 erreicht.

Bei diesem Verfahren wird nicht der gesamte Entnahmestutzen erwärmt, sondern nur die äußeren Ränder der am Entnahmestutzen vorstehenden Rippen auf die Schweißtemperatur. Eine solche, nur auf die Außenseite des Entnahmestutzens gerichtete Wärmestrahlung braucht nur sehr kurzzeitig eingesetzt zu werden, um die äußeren Rippenränder zum Schmelzen zu bringen.

Erfindungsgemäß verformen die äußeren Ränder der Rippen beim Andrücken im aufgeschmolzenen Zustand gegen die Folieninnenwand sich im Querschnitt T-förmig, um hierdurch eine vergrößerte Anlagefläche an der Folieninnenwand zu bilden.

Die große Kontaktfläche über T-förmig resultierende Schweißkontaktstellen ist besonders geeignet, die Kräfte auf die gefüllte Verpackung zu übertragen, ohne Rissgefahr. Das ist besonders für Monomaterial Polyethylen Beutelverpackungen wichtig, da dort die notwendige Steifigkeit durch Schichten aus verschiedenen Polyethylen-Sorten ermöglicht wird. Auch ist eine hohe Sortenreinheit der Beutelverpackung erreichbar.

Vorzugsweise wird vorgeschlagen, dass die am Einschweißbereich außen vorstehenden Rippen zwischen sich eine Vielzahl von Kammern bilden zur Aufnahme aufgeschmolzenem Kunststoffmaterials. Die Kammern nehmen die verdrängte Schmelze sicher auf, wobei vorzugsweise die Größe der Kammern dem verdrängten Volumen entspricht, so dass eine glatte Fläche zwischen Folie und Entnahmestutzen bzw. Einschweißteil geschaffen wird, und damit außenseitig eine ideal schöne glatte Optik. Hierbei können die Kammern im senkrechten Querschnitt kreisförmig, oval, rechteckförmig oder rautenförmig sein.

Vorzugsweise bildet der Einschweißbereich des Entnahmestutzens Rippen, deren Außenränder durch die Erwärmung aufschmelzen, und die Innenflächen der Beutelfolien auf die aufgeschmolzenen Außenränder aufgedrückt werden. Ferner wird vorgeschlagen, dass der Entnahmestutzen und zumindest die Innenflächen der Randbereiche der Folien aus demselben Kunststoff oder derselben Kunststoffsorte bestehen.

Die oben genannten Vorteile werden optimal auch dann erreicht, wenn das Erwärmen der äußeren Ränder der Rippen des Einschweißbereichs auf die Schweißtemperatur berührungslos durch Strahlungswärme oder Laserstrahlen erfolgt. Dies vermindert auch das Entstehen von Dämpfen und Gasen während des Erwärmens.

Ausführungsbeispiele des Einschweißbereichs des erfindungsgemäßen Entnahmestutzens sind in den Zeichnungen perspektivisch dargestellt. Es zeigen
- Fig. 1: den Einschweißbereich mit vier waagerechten Rippen mit Zwischenräumen,
- Fig. 2: den Einschweißbereich mit vier waagerechten Rippen mit seitlich geschlossenen Zwischenräumen,
- Fig. 3: den Einschweißbereich mit einer Vielzahl nach außen offenen rechtwinkligen Kammern,
- Fig. 4: den Einschweißbereich mit einer Vielzahl nach außen offenen rechtwinkligen Kammern verschiedener Größe,
- Fig. 5: den Einschweißbereich mit einer Vielzahl nach außen offenen rautenförmigen Kammern,
- Fig. 6: den Einschweißbereich mit einer Vielzahl nach außen offenen ringförmigen Kammern,
- Fig. 7: den Einschweißbereich mit einer Vielzahl nach außen offenen kreisförmigen Kammern.

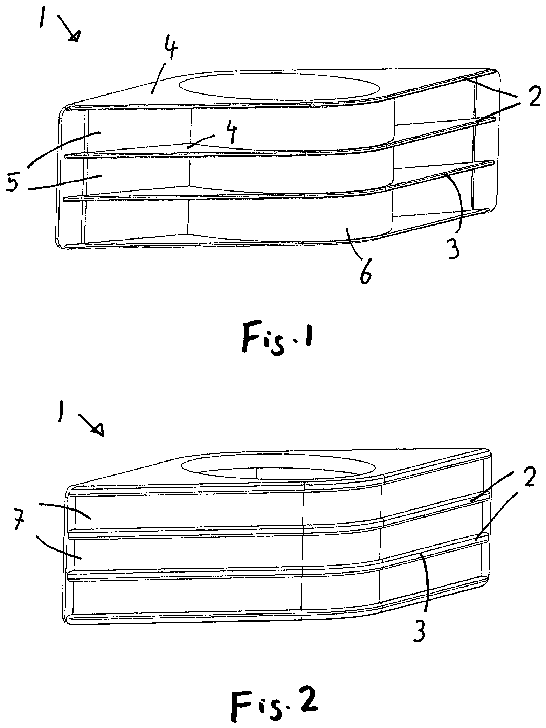

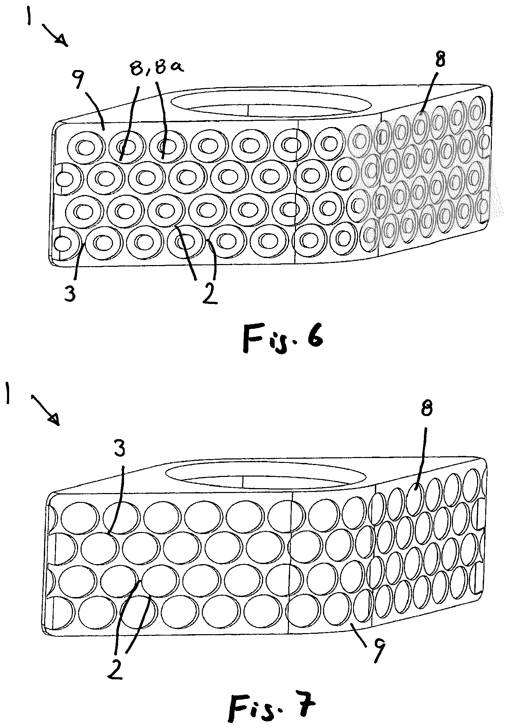

Die Erfindung betrifft einen Entnahmestutzen aus Kunststoff für Beutelverpackungen, wie er zum Beispiel in der DE 10 2007 029 541 A1 und in der DE 10 2010 006 426 B4 beschrieben ist. In den anhängenden Zeichnungen Fig. 1 bis Fig. 7 ist nur der schiffchenförmige Einschweißbereich 1 dargestellt, der an den rohrförmigen Ausgießstutzen angeformt ist, der durch eine Schraubkappe verschließbar ist, die mit ihrem Innengewinde auf das Außengewinde des Ausgießstutzens aufschraubbar ist.

Ein solcher Entnahmestutzen wird mit seinem Einschweißbereich 1 zwischen die zwei Beutelseitenwände aus Kunststofffolie eingeschweißt. Hierzu besitzt der Einschweißbereich auf beiden Seiten seitlich vorstehende waagerechte, gebogene Rippen 2 (bei senkrechter Achse des rohrförmigen Entnahmestutzens), auf deren äußeren Rändern 3 die Innenfläche der Beutelseitenwände angeschweißt werden. In der in Fig. 1 dargestellten Ausführung sind die Rippen 2 von vier waagerechten schiffchenförmigen oder rautenförmigen Flächen 4 gebildet, die parallel übereinander in gleichen Abständen liegen und zwischen sich drei Zwischenräume 5 bilden. Mittig durch die vier Flächen 4 verläuft der rohrförmige Ausgießstutzen 6. In der Ausführung nach Fig. 2 sind die drei Räume 5 durch Schließwände 7 seitlich geschlossen.

Zum Anschweißen der Seitenwände der Beutelverpackung an den Einschweißbereich 1 des Entnahmestutzens werden die äußeren Ränder 3 der Rippen 2 des Einschweißbereichs auf die Schweißtemperatur erwärmt und im aufgeschmolzenem Zustand zwischen die Randbereiche der Beutelkunststofffolien gebracht und die Folien an die äußeren Ränder 3 der Rippen 2 angedrückt. Hierbei muss nicht der gesamte Einschweißbereich erwärmt werden, sondern es müssen nur die äußeren Ränder 3 der Rippen 2 so weit erhitzt werden, dass sie aufgeschmolzen werden. Dabei ist von Bedeutung, dass die äußeren Ränder der Rippen beim Andrücken im aufgeschmolzenen Zustand gegen die Folieninnenwand sich im Querschnitt T-förmig verformen, um hierdurch eine vergrößerte Anlagefläche an der Folieninnenwand zu bilden.

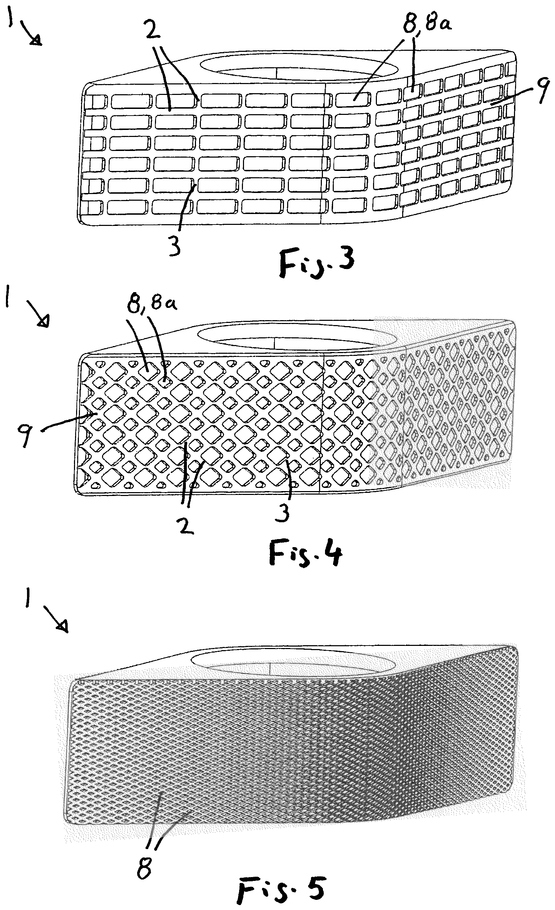

In den in Fig. 3 bis 7 dargestellten Ausführungen bilden die zwei senkrechten Außenseiten 9 der Einschweißbereiche 1 eine Vielzahl von Kammern 8 in Form von nach außen offenen Ausnehmungen mit jeweils einer rückspringenden senkrechten ebenen Bodenfläche 8a und einem die Bodenfläche umgebenden Rand 8b der kreisförmig, oval, rechteckförmig oder rautenförmig geformt ist, so dass die Kammern im senkrechten Querschnitt kreisförmig, oval, rechteckförmig oder rautenförmig sind. Damit sind die beiden senkrechten Außenseiten 9 jeweils in eine Vielzahl von nach außen offenen Kammern 8 aufgeteilt, die den Einschweißbereich 1 gleichmäßig verteilt überziehen und zwischen sich die Rippen 2 bilden, deren äußeren Ränder 3 aufgeschmolzen werden, wie oben ausgeführt. Beim Aufdrücken der Beutelseitenwand auf die Rippen 2 wird das aufgeschmolzene Kunststoffmaterial der Rippen 2 seitlich in die Kammern 8 hineingedrückt, so dass danach die Außenfläche 9 bzw. die Seitenwand des Einschweißbereichs mit der Innenwand der Beutelfolie eine gleichmäßige Schicht bildet.

Anzahl, Größe, Form und Tiefe der Kammern 8 sind davon abhängig, wieviel aufgeschmolzenes Kunststoffmaterial entsteht, dass durch die Kammern aufgefangen werden muss. Eine optimale Haftfunktion wird erreicht, wenn eine gleichmäßige ununterbrochene Fläche von Kunststoffschmelze entsteht.

Besonders vorteilhaft ist es, wenn die äußeren Ränder 3 der Rippen 2 des Einschweißbereichs auf die Schweißtemperatur durch Laserstrahlen erfolgt. Alternativ kann dies auch durch Strahlungswärme erfolgen. Hierzu werden heiße Körper entlang der Konturen der Rändern 3 angeordnet. In beiden Erwärmungsalternativen wird das Entstehen von Dämpfen und Gasen weitgehend verhindert.

## Patentansprüche

1. Verfahren zum Einschweißen eines Entnahmestutzens mit seinem Rippen aufweisenden Einschweißbereich (1) zwischen die flexiblen Kunststofffolien einer Beutelverpackung, wobei die äußeren Ränder (3) der Rippen (2) des Einschweißbereichs auf die Schweißtemperatur erwärmt und im aufgeschmolzenem Zustand zwischen die Randbereiche der Beutelkunststofffolien gebracht und die Folien an die äußeren Ränder (3) der Rippen (2) angedrückt werden,
wobei die äußeren Ränder (3) der Rippen (2) beim Andrücken im aufgeschmolzenen Zustand gegen die Folieninnenwand sich im Querschnitt T-förmig verformen, um hierdurch eine vergrößerte Anlagefläche an der Folieninnenwand zu bilden,
wobei die ein-, zwei- oder mehrlagigen Folien der Beutelverpackung aus demselben Kunststoff oder derselben Kunststoffsorte wie der des Entnahmestutzens bestehen, und
wobei der Einschweißbereich (1) des Entnahmestutzens Rippen (2) bildet, deren Außenränder durch die Erwärmung aufschmelzen, und die Innenflächen der Beutelfolien auf die aufgeschmolzenen Außenränder (3) aufgedrückt werden.

2. Verfahren nach Anspruch 1, **dadurch gekennzeichnet, dass** die am Einschweißbereich (1) außen vorstehenden Rippen (2) zwischen sich eine Vielzahl von Kammern (8) bilden zur Aufnahme aufgeschmolzenem Kunststoffmaterials.

3. Verfahren nach Anspruch 2, **dadurch gekennzeichnet, dass** die Kammern (8) im senkrechten Querschnitt kreisförmig, oval, rechteckförmig oder rautenförmig sind.

4. Verfahren nach Anspruch 1, **dadurch gekennzeichnet, dass** der Entnahmestutzen und zumindest die Innenflächen der Randbereiche der Folien aus demselben Kunststoff oder derselben Kunststoffsorte bestehen.

5. Verfahren nach einem der vorherigen Ansprüche, **dadurch gekennzeichnet, dass** der Kunststoff der Folien der Beutelverpackung und des Entnahmestutzens aus einem Polyolefin vorzugsweise aus Polyetylen oder Polypropylen bestehen.

6. Verfahren nach einem der vorherigen Ansprüche, **dadurch gekennzeichnet, dass** das Erwärmen der äußeren Ränder (3) der Rippen (2) des Einschweißbereichs auf die Schweißtemperatur berührungslos durch Strahlungswärme oder Laserstrahlen erfolgt.

## Claims

1. Method for welding in a discharge spout, by way of its weld-in region (1) comprising ribs, between the flexible plastics films of a pouch packaging, wherein the outer edges (3) of the ribs (2) of the weld-in region are heated to the welding temperature and brought in the melted state between the edge regions of the pouch plastics films, and the films are pressed against the outer edges (3) of the ribs (2),
wherein the outer edges (3) of the ribs (2) deform in the shape of a T in cross section during the pressing in the melted state against the film inner wall, in order to thereby form an enlarged abutment surface against the film inner wall,
wherein the single-layer, two-layer or multi-layer films of the pouch packaging consist of the same plastic or the same type of plastic as that of the discharge spout, and
wherein the weld-in region (1) of the discharge spout forms ribs (2), the outer edges of which melt as a result of the heating, and the inner surfaces of the pouch films are pressed onto the melted outer edges (3).

2. Method according to Claim 1, **characterized in that** the outwardly protruding ribs (2) on the weld-in region (1) form, between them, a multiplicity of chambers (8) for receiving melted plastics material.

3. Method according to Claim 2, **characterized in that** the chambers (8) are circular, oval, rectangular or rhombic in vertical cross section.

4. Method according to Claim 1, **characterized in that** the discharge spout and at least the inner surfaces of the edge regions of the films consist of the same plastic or the same type of plastic.

5. Method according to one of the preceding claims, **characterized in that** the plastic of the films of the pouch packaging and of the discharge spout consist of a polyolefin, preferably of polyethylene or polypropylene.

6. Method according to one of the preceding claims, **characterized in that** the outer edges (3) of the ribs (2) of the weld-in region are heated to the welding temperature in a contactless manner by radiant heat or laser beams.

## Revendications

1. Procédé pour souder un embout de prélèvement avec sa zone de soudage (1) présentant des nervures entre les films plastiques flexibles d'un emballage en sachet, les bords extérieurs (3) des nervures (2) de la zone de soudage étant chauffés à la température de soudage et étant amenés à l'état fondu entre les zones de bord des films plastiques du sachet et les films étant pressés sur les bords extérieurs (3) des nervures (2),
les bords extérieurs (3) des nervures (2) se déformant dans la section transversale en forme de T lors de la pression à l'état fondu contre la paroi intérieure des films, afin former ainsi une surface d'appui agrandie sur la paroi intérieure des films,
les films à une, deux ou plus de deux couches de l'emballage en sachet étant constitués de la même matière plastique ou du même type de matière plastique que celle de l'embout de prélèvement, et
la zone de soudage (1) de l'embout de prélèvement formant des nervures (2) dont les bords extérieurs fondent sous l'effet du chauffage, et les surfaces intérieures des films du sachet étant pressées sur les bords extérieurs (3) fondus.

2. Procédé selon la revendication 1, **caractérisé en ce que** les nervures (2) faisant saillie vers l'extérieur sur la zone de soudage (1) forment entre elles une pluralité de chambres (8) pour recevoir la matière plastique fondue.

3. Procédé selon la revendication 2, **caractérisé en ce que** les chambres (8) ont une section transversale verticale circulaire, ovale, rectangulaire ou en forme de losange.

4. Procédé selon la revendication 1, **caractérisé en ce que** l'embout de prélèvement et au moins les surfaces intérieures des zones de bord des films sont constitués de la même matière plastique ou du même type de matière plastique.

5. Procédé selon l'une quelconque des revendications précédentes, **caractérisé en ce que** la matière plastique des films de l'emballage en sachet et de l'embout de prélèvement est constituée d'une polyoléfine, de préférence de polyéthylène ou de polypropylène.

6. Procédé selon l'une quelconque des revendications précédentes, **caractérisé en ce que** le chauffage des bords extérieurs (3) des nervures (2) de la zone de soudage à la température de soudage s'effectue sans contact par de la chaleur rayonnante ou des rayons laser.
